# NEUE EUROPÄISCHE PATENTSCHRIFT

(11) **EP 2 452 791 B2**
(45) Veröffentlichungstag und Bekanntmachung des Hinweises auf die Entscheidung über den Einspruch: **19.06.2019**
(45) Hinweis auf die Patenterteilung: 24.06.2015
(21) Anmeldenummer: 11008256.7
(22) Anmeldetag: 13.10.2011
(51) Int. Cl.: B27L 11/00, B02C 18/14, B02C 18/22, A01G 3/00

(54) **Austragvorrichtung für eine Holzhackmaschine**
Discharge device for a wood chipping machine
Dispositif de sortie pour une déchiqueteuse

(30) Priorität: 10.11.2010 DE 102010050786
(43) Veröffentlichungstag der Anmeldung: 16.05.2012
(73) Patentinhaber: Eschlböck - Maschinenbau Gesellschaft m.b.H., 4731 Prambachkirchen (AT)
(72) Erfinder: Kloth, Hartmut, 31547 Rehburg / Loccum (DE); Schildmeier, Horst, 32469 Petershagen (DE)
(74) Vertreter: Grünecker Patent- und Rechtsanwälte PartG mbB

(56) Entgegenhaltungen:
- EP-A1- 1 649 933
- EP-A1- 1 935 595
- EP-A1- 1 935 596
- DE-A1- 19 520 982
- DE-C1- 4 126 910
- DE-U1- 9 217 851
- DE-U1- 29 517 867
- DE-U1-202005 010 025
- DE-U1-202007 015 665

## Beschreibung

### Technisches Umfeld

Die Erfindung betrifft eine Holzhackmaschine umfassend eine Austragvorrichtung und eine Gebläsevorrichtung, welche Austragvorrichtung mit einer Austragschnecke zum Transport des Hackgutmaterials aus dem Zerkleinerer der Holzhackmaschine zu der Gebläsevorrichtung mit mindestens einem, mit einer Mehrzahl von Wurfschaufeln versehenen, auf einer Drehwelle angeordneten Schaufelrad versehen ist.

### Stand der Technik

Austragvorrichtungen der beschriebenen gattungsgemäßen Art sind seit Langem bekannt, um das von einer Holzhackmaschine produzierte Hackgutmaterial aus der Hackmaschine heraus zu einem Lagerplatz bzw. einem Transportanhänger zu transportieren. Bei mobilen Holzhackmaschinen werden Üblicherweise Wurfgebläse eingesetzt, die unter hohem Energieaufwand das Hackgutmaterial mit großer Geschwindigkeit auswerfen.

Die übliche Bauart der Austragvorrichtungen sieht dabei vor, dass sich die zur Austragsschnecke gehörende Schneckenwelle und die Drehwelle der Wurfschaufel der Gebläsevorrichtung hinsichtlich der Anordnung ihrer Wellenlängsachsen in parallelen Ebenen befindet. Diese Bauart ist historisch begründet und bislang konstruktiv nie hinterfragt und geändert worden.

Neben dem Vorteil des großen Wirkungskreises dieser Austragvorrichtungen aufgrund der großen Wurfweite sind als Nachteile der hohe Energieaufwand und die Nachzerkleinerung des Hackgutmaterials in der Gebläsevorrichtung zu nennen. Diese Nachteile werden bislang billigend in Kauf genommen, da am Markt keine andere Technik verfügbar ist.

Neben dieser Auswurftechnik wird alternativ ein schonender Abtransport des Hackgutmaterials mittels Förderbändern durchgeführt. Das Hackgutmaterial wird dabei mit geringerer Geschwindigkeit energieeffizienter und materialschonend abtransportiert. Allerdings geht mit dieser Fördertechnik unmittelbar der Nachteil einher, dass die Förderbänder aufgrund von begrenzter Länge und einem Steigungswinkel von maximal 45 Grad nur einen begrenzten Aktionsradius haben. Optimal ist daher eine Kombination beider Transportvorrichtungen an einer Holzhackmaschine, die dann wahlweise zum Einsatz kommen können.

Eine solche Kombination ist auch bereits aus der DE 20 2007 015 665 U1 bekannt.

Allerdings ist bei mobilen Holzhackmaschinen der Bauraum begrenzt und bei der Kombination beider Systeme muss die Materialstromweiche wie in der oben angeführten Schrift beschrieben der Schwerkraft folgend vertikal angeordnet sein. Die dadurch erforderliche Bauhöhe bedingt weitreichende Einsatzeinschränkungen beispielsweise beim Aufbau einer Holzhackmaschine auf einem LKW-Fahrgestell.

Im Rahmen der Weiterentwicklung von Austragvorrichtungen für Holzhackmaschinen, die insbesondere im Hinblick auf höhere Energieeffizienz, Hackgutqualität, Reparaturunanfälligkeit sowie einer Reduzierung der Bauhöhe gegenüber den aus dem Stand der Technik bekannten Austragvorrichtungen hat sich gezeigt, dass die herkömmlichen Vorrichtungen auf Grund des am Ausgang der Austragschnecke durch das Gebläserad umgelenkten Materialstromes seitlich in Richtung der Drehwelle eine extreme Nachzerkleinerung des Hackgutmaterials durchführen. Weiterhin ist bei dieser Bauform der Energieaufwand sehr hoch, da das Hackgutmaterial durch einen engen Bauraum gepresst werden muss. Weiterhin bedingt die Umlenkung des Materialstromes eine erneute Beschleunigung des Hackgutmaterials, so dass die Relativgeschwindigkeit, die das Hackgutmaterial durch die Zuführschnecken erfahren hat, nicht genutzt werden kann.

Eine Nachzerkleinerung ist prinzipiell auf Grund der von den heute üblichen Holzhackmaschinen produzierten Qualität an Hackgutmaterial weder erforderlich noch gewünscht. Durch die Nachzerkleinerung werden die Wurfschaufeln des Schaufelrades zusätzlich zu den Anforderungen des reinen Materialtransportes nicht unwesentlich belastet, was insbesondere bei hohem Materialdurchsatz sowie bei mit Erdreich verschmutztem Hackgutmaterial zu kurzen Intervallen führt, in denen die für den Transport des Hackgutmaterials verantwortlichen Mitnahmebleche an den Wurfschaufeln überprüft und ggf. ausgetauscht werden müssen, um zum einen die Wurfleistung der Austragvorrichtung zu erhalten und zum anderen größere Schäden an der Gebläsevorrichtung zu vermeiden.

Naturgemäß hat die unerwünschte Nachzerkleinerung des Holzhackmaterials zusätzlich den Nachteil, dass der Gesamtaufwand an Energie für den Betrieb der Gebläsevorrichtung sehr hoch ist.

### Aufgabe der Erfindung

Ausgehend von den oben beschriebenen Nachteilen von Austragvorrichtungen für eine Holzhackmaschine besteht die Aufgabe der Erfindung darin, derartige Austragvorrichtungen so weiterzuentwickeln, dass sie mit geringerem Energieaufwand als bislang üblich betrieben werden können und darüber hinaus insbesondere bei empfindlicheren Holzhackmaterial ein schonender Transport gewährleistet ist.

Darüber hinaus soll eine derartige neuartige Austragvorrichtung selbstverständlich in der konstruktiven Gestaltung unkompliziert aufgebaut und somit kostengünstig produzierbar sein. Ergänzend bilden bei der Aufgabenstellung hohe Zuverlässigkeit mit daraus resultierenden hohen Einsatzzeiten und reduziertem Wartungsaufwand eine Zielvorgabe.

### Lösung der Aufgabe

Die Erfindung stellt eine Holzhackmaschine gemäß Anspruch 1 bereit.

Erfindungswesentlich dabei ist es, dass die Drehwelle des Schaufelrades im wesentlichen rechtwinklig zur Längsachse der Austragsschnecke angeordnet ist.

Die geschilderte Lösung führt dazu, dass der von der Austragsschnecke transportierte Hackgutmaterialstrom beim Eintritt in die Gebläsevorrichtung in gleicher Richtung weiterbefördert wird. Es erfolgt somit nicht länger wie bei allen aus dem Stand der Technik bekannten Austragvorrichtungen ein Umlenken des Materialstromes, welches unweigerlich mit einer Nachzerkleinerung des Hackgutmaterials verbunden ist.

Die erfindungsgemäße Lösung bietet dem gegenüber den Vorteil, dass über die gesamte Breite der Ausgangsöffnung der Austragschnecke eine Materialübergabe in die Gebläsevorrichtung erfolgen kann. Die Wurfschaufeln des Schaufelrades greifen dabei von oben in den Hackgutmaterialstrom hinein und beschleunigen bedingt durch die Drehzahl des Schaufelrades den Materialstrom sehr viel schonender als dies bei herkömmlichen Vorrichtungen der Fall ist. Bedingt durch die fehlende Nachzerkleinerung und die beschriebene sanfte Förderung des Materialstromes ist der Energieeinsatz für den Betrieb der Gebläsevorrichtung gegenüber aus dem Stand der Technik bekannten in der Größe vergleichbaren Vorrichtungen um ca. 50 bis 70 % reduziert.

Besondere Ausgestaltungen des Gegenstandes der Erfindung ergeben sich in Zusammenschau mit der technischen Lehre des Anspruches 1 zusätzlich aus den auf den Hauptanspruch zurückbezogenen Unteransprüchen.

Es hat sich insbesondere als vorteilhaft erwiesen, wenn die Austragschnecke in ihrem der Gebläsevorrichtung zugewandten Endbereich eine ansteigende Steigerung der Schneckenwindung der Schneckenwelle bzw. der Schneckenwellen aufweist. Durch diese Maßnahme kann der Hackgutmaterialstrom bereits im Ausgangsbereich der Austragschnecke beschleunigt und somit im Übergabebereich an die Gebläsevorrichtung eine noch sanftere Weiterleitung des Hackgutmaterials herbeigeführt werden.

Es hat sich entsprechend einer vorteilhaften Weiterbildung darüber hinaus als zweckmäßig erwiesen, wenn das Schaufelrad eine Aufnahmevorrichtung zur wahlweisen Anordnung von zwei bis sechs Wurfschaufein aufweist. Die Anordnung einer unterschiedlichen Anzahl von Wurfschaufein am Schaufelrad bietet die Möglichkeit, die Gebläsevorrichtung optimal an den Materialstrom des Hackgutes anzupassen. Dies kann in Abhängigkeit von der Art der zu hackenden Holzart sowie der Größe der Einzelbestandteile des Hackgutmaterials je nach Anwendung der vorgeschalteten Holzhackmaschine vorteilhaft sein.

Trotz des schonenden Transportes des Hackgutmaterials innerhalb der Gebläsevorrichtung ist es natürlich in entsprechenden Zeitintervallen notwendig, den durch den Materialstrom verursachten Verschleiß an Bauteilen des Schaufelrades im Rahmen von Wartungsarbeiten zu beheben. Erfindungsgemäß sind deshalb für eine erleichterte Wartung die äußeren Randbereiche der Wurfschaufein in Drehrichtung des Schaufelrades mit einem austauschbaren Mitnahmeblech versehen.

Diese Mitnahmebleche sind erfindungsgemäß so angeordnet, dass ihre äußeren radialen Endbereiche gegenüber den mittigen Bereichen in Transportrichtung des Materialstroms gesehen vorstehen, so dass sich eine v-förmige Ausgestaltung ergibt. Diese Anordnung der Mitnahmebleche führt dazu, dass der Materialstrom im Gebläsegehäuse in dessen Längsmitte zentriert wird und mittig einer nachgeschalteten Auswurfvorrichtung übergeben werden kann.

Diese Auswurfvorrichtung kann ein übliches Auswurfrohr sein, über den das Material auf einen Transportanhänger oder eine sonstige geeignete Transportvorrichtung geworfen wird. Derartige Auswurfrohre sind aus dem Stand der Technik bei herkömmlichen Austragvorrichtungen hinlänglich bekannt und üblicherweise sowohl in ihrer Neigung verstellbar als auch drehbar ausgeführt.

Eine weitere vorteilhafte Ausgestaltung der erfindungsgemäßen Austragvorrichtung sieht vor, dass die Gebläsevorrichtung ein Gebläsegehäuse aufweist, welches mit einem Transporttrichter zum Anschluss an das Auswurfrohr und einer beweglichen Materialstromsteuerklappe versehen ist. Die bewegliche Materialstromsteuerstromklappe ist so ausgestaltet, dass sie die Öffnung zu einer Versorgungseinheit für eine Transportschnecke freigeben oder verschließen kann.

Durch den wahlweisen Weitertransport des Hackgutmaterialstromes mittels eines herkömmlichen Auswurfrohres oder alternativ mittels einer an das Gebläsegehäuse angebauten weiteren Transportschnecke besteht eine optimale Möglichkeit, je nach Anforderung einen schonenden und effizienten Transport des Holzhackmaterials durchzuführen.

Darüber hinaus ermöglicht die neue technische Lösung, die Bauhöhe der Austragvorrichtung deutlich zu reduzieren, da die Materialübergabe nun hinter und nicht unter der Gebläsevorrichtung liegt. Dies ist insbesondere bei mobilen Holzhackmaschinen ein großer Vorteil, da die Bauhöhe durch Zulassungsvorschriften für den Straßenverkehr begrenzt ist.

Um bei geöffneter Materialstromsteuerklappe das Holzhackmaterial dem Eingangsbereich der Förderschnecke zuzuleiten, wird die Drehzahl des Schaufelrades der Gebläsevorrichtung soweit reduziert, dass der aus der Austragschnecke austretende Materialstrom nur minimal beschleunigt wird. Die reduzierte Geschwindigkeit des Materialstromes erleichtert eine Übergabe in den Eingangsbereich der Förderschnecke und vermeidet dort Verstopfungen durch das Holzhackmaterial. Die Förderschnecke kann wie allgemein üblich natürlich in ihrer Neigung verstellt und gedreht werden, so dass auch hier optimale Transportverhältnisse geschaffen sind. Darüber hinaus kann natürlich die Materialstromsteuerklappe mittels einer Antriebsvorrichtung automatisch betätigbar ausgeführt werden.

Bei der erfindungsgemäßen Austragvorrichtung hat es sich darüber hinaus als vorteilhaft erwiesen, den Materialstromtransport im Übergangsbereich zum Auswurfrohr innerhalb des Transporttrichters zu optimieren. Zweckmäßig dabei Ist es, wenn der Transporttrichter im Querschnitt so ausgebildet ist, dass das aus dem Gebläsegehäuse in das Auswurfrohr austretende Holzhackmaterial im zentralen Mittelbereich des durch die v-förmige Ausgestaltung der Mitnahmebleche dort konzentrierten Materialstromes frei an der Trichterwandung entlang strömt. Durch diese Maßnahme wird ein vorzeitiger Verschleiß der Trichterwandung vermieden.

Das Ziel des freien Entlangströmens des Materialstromes an der Trichterwandung kann dadurch herbeigeführt werden, dass die Tangente an den Außenumfang des Schaufelrades der Gebläsevorrichtung im Bereich der Übergabeöffnung zum Transporttrichter die Wandung des Transporttrichters nicht schneidet.

### Figurenbeschreibung

Im Folgenden werden die erfindungswesentlichen Aspekte der neuartigen Austragvorrichtung für eine Holzhackmaschine anhand der beigefügten Zeichnungen näher erläutert. Bei der Darstellung der einzelnen Figuren wurde aus Gründen der Übersichtlichkeit auf die Darstellung der übrigen Komponenten der Holzhackmaschine, wie beispielsweise der Hacktrommel sowie weiterer Anbauaggregate, verzichtet. Die Austragsvorrichtung ist selbstverständlich sowohl bei einer stationären als auch einer transportablen, d.h. auf einem Fahrgestell montierten Holzhackvorrichtung verwendbar. Es zeigt:
- Figur 1: eine perspektivische Gesamtdarstellung der Austragvorrichtung mit Teilschnitten,
- Figur 2: eine perspektivische Darstellung der Austragschnecke,
- Figur 3: eine perspektivische Darstellung eines Schaufelrades der Gebläsevorrichtung mit zwei Wurfschaufeln,
- Figur 4: eine perspektivische Darstellung eines Schaufelrades der Gebläsevorrichtung mit sechs Wurfschaufeln,
- Figur 5: eine Draufsicht auf ein Schaufelrad der Gebläsevorrichtung mit vier Wurfschaufeln,
- Figur 6: eine perspektivische Teildarstellung der Gebläsevorrichtung mit angebauter Versorgungseinheit für eine Transportschnecke bei geöffneter Materialstromsteuerklappe,
- Figur 7: eine perspektivische Darstellung der Gebläsevorrichtung mit angebauter Versorgungseinheit für eine Transportschnecke bei geschlossener Materialstromsteuerklappe,
- Figur 8a: eine Draufsicht auf die Gebläsevorrichtung und
- Figur 8b: eine Schnittdarstellung entsprechend der Schnittlinie A-A aus Figur 8a.

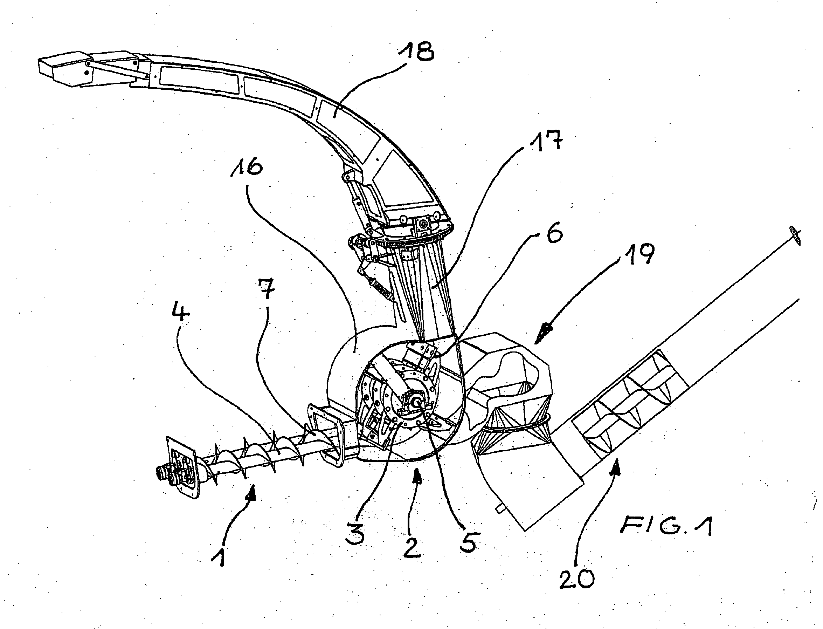

Als wesentliche Elemente der Austragvorrichtung können der Figur 1 eine Austragschnecke 1 und eine sich an den Ausgang der Austragschnecke 1 anschließende Gebläsevorrichtung 2 entnommen werde.

Die Gebläsevorrichtung 2 besitzt ein Gebläsegehäuse 16, in dessen Innern ein Schaufelrad 3 auf einer Drehwelle 5 rotierend gelagert ist. An das Gebläsegehäuse 16 ist an seiner Oberseite ein Transporttrichter 17 angebaut, der zum Anschluss an ein Auswurfrohr 18 dient. Durch das Auswurfrohr 18 und den vorgeschalteten Transporttrichter 17 wird ein Materialstrom von Hackgutmaterial, der durch die Austragschnecke 1 aus dem Zerkleinerer einer Holzhackmaschine gefördert wird, über die Gebläsevorrichtung 2 nachgeschalteten Vorrichtungen zum Transport des Hackgutmaterials zum Einsatzort zugeleitet.

Als weitere Möglichkeit, den Materialstrom aus der Gebläsevorrichtung zu leiten dient eine ebenfalls am Gebläsegehäuse 16 angebaute Versorgungseinheit 19 zu einer Förderschnecke 20.

Aus Gründen der Übersichtlichkeit ist in der Figur 1 die Gehäuseummantelung der Austragsschnecke 1 weggelassen, so dass die zur Austragschnecke 1 gehörenden beiden Schneckenwellen 4 deutlich sichtbar sind. Wesentliches Merkmal der technischen Lehre der Austragsvorrichtung bildet die Tatsache, dass das zur Gebläsevorrichtung 2 gehörende Schaufelrad 3 bzw. dessen Drehwelle 5, mit deren Hilfe das Schaufelrad 3 innerhalb des Gebläsegehäuses 16 drehbar gelagert ist, im wesentlichen rechtwinkelig zur Längsachse der Schneckenwelle 4 der Austragschnecke 1 angeordnet ist.

Durch diese besondere Ausgestaltung ist ein besonders schonender Materialtransport im Übergangsbereich zwischen dem Ende der beiden Schneckenwellen 4 der Austragschnecke 1 und dem Eingangsbereich der Gebläsevorrichtung 2 gegeben. Dies ergibt sich aus der Tatsache, dass im Gegensatz zu aus dem Stand der Technik bekannten Austragsvorrichtungen keine Änderung der Materialstromrichtung des Hackgutmaterials erfolgt, sondern lediglich eine Beschleunigung je nach Drehzahl des Schaufelrades 3 der Gebläsevorrichtung 2.

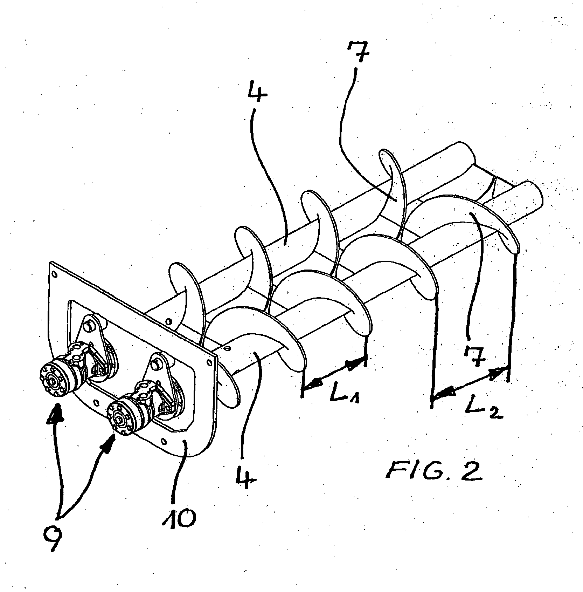

In der Figur 2 ist das Innere der Austragschnecke 1 in Form der beiden nebeneinander angeordneten Schneckenwellen 4 im Detail dargestellt. Die Schneckenwellen 4 sind an einem Schneckengehäuseflansch 10 festgelegt. Der Schneckengehäuseflansch 10 ist Bestandteil des Gehäuses der Austragschnecke 1, welches aus Gründen der Übersichtlichkeit in den Abbildungen nicht näher dargestellt wurde. Außerhalb des Schneckengehäuseflansches 10 befindet sich zur Lagerung der Schneckenwellen 4 sowohl eine Lagereinheit als auch jeweils für je eine Schneckenwelle 4 separate Antriebe 9.

Aus der Figur 2 wird deutlich, dass die Schneckenwelle 2 umlaufend um ein zentrales Schneckenwellenrohr jeweils eine Schneckenwindung 7 aufweist. Die Steigung der jeweiligen Schneckenwindung 7 einer Schneckenwelle 4 ist über die Länge der Schneckenwelle 4 veränderlich. Um eine zusätzliche Beschleunigung des Materialstromes des Hackgutes im Übergangsbereich zur Gebläsevorrichtung 2 zu erzielen ist die Steigung der Schneckenwindung 7 im Bereich des freien Endes der Schneckenwelle 4 gegenüber dem Schneckengehäuseflansch 10 größer als in dem dem Schneckengehäuseflansch 10 zugewandtem Bereich. Dies wird verdeutlicht durch die in der Figur 2 dargestellten Abstände zweier benachbarter Schneckenwindungen, die mit L₁ und L₂ gekennzeichnet sind. L₂ ist, wie dies einfach zu erkennen ist, im Wert größer bemessen als der Abstand L₁. Somit findet für den Materialstrom bedingt durch diese technisch konstruktive Maßnahme eine Beschleunigung des Hackgutmaterialstromes im Endbereich der Schneckenwelle 4 statt.

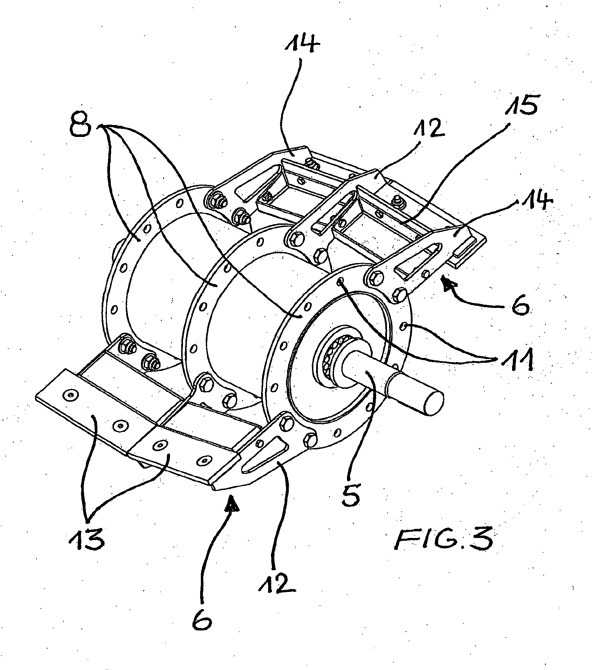

Als weitere Verbesserung des Durchsatzes des Hackgutmaterialstromes innerhalb der Gebläsevorrichtung sieht eine vorteilhafte Weiterbildung vor, das in der Figur 3 als Einzelteil perspektivisch dargestellte Schaufelrad 3 mit einer insgesamt mit 8 bezeichneten Aufnahmevorrichtung zu versehen, die eine wahlweise Anordnung von zwei bis sechs Wurfschaufeln 6 am Umfang des Schaufelrades 3 erlaubt. Die Aufnahmevorrichtung 8 besteht im wesentlichen aus drei am Schaufelrad 3 festgelegten Blechringen, welche mit Durchbrechungen 11 versehen sind. An jeweils zwei benachbarten Durchbrechungen 11 kann wie dies der Figur 3 entnehmbar ist, jeweils eine Wurfschaufel 6 festgelegt werden, wobei die Festlegung im dargestellten Ausführungsbeispiel insgesamt an drei Blechringen 8 erfolgt.

Die Wurfschaufel 6 selbst besteht aus einem Wurfschaufelgestell 12 sowie am Wurfschaufelgestell 12 festgelegten Mitnahmeblechen 13. Das Wurfschaufelgestell 12 wiederum ist gebildet aus drei Rippen 14, sowie zwei zwischen den Rippen angeordneten Quertraversen 15. Da die Wurfschaufel 6 während ihres Betriebes zum Transport des Hackgutmaterials einem natürlichen Verschleiß unterliegt, sind die Mitnahmebleche 13 am Wurfschaufelgestell 12 lösbar mittels geeigneter Verschraubungen festgelegt, so dass ein leichter Austausch der für die Transportaufgabe des Schaufelrades 3 wichtigen Mitnahmebleche 13 erfolgen kann.

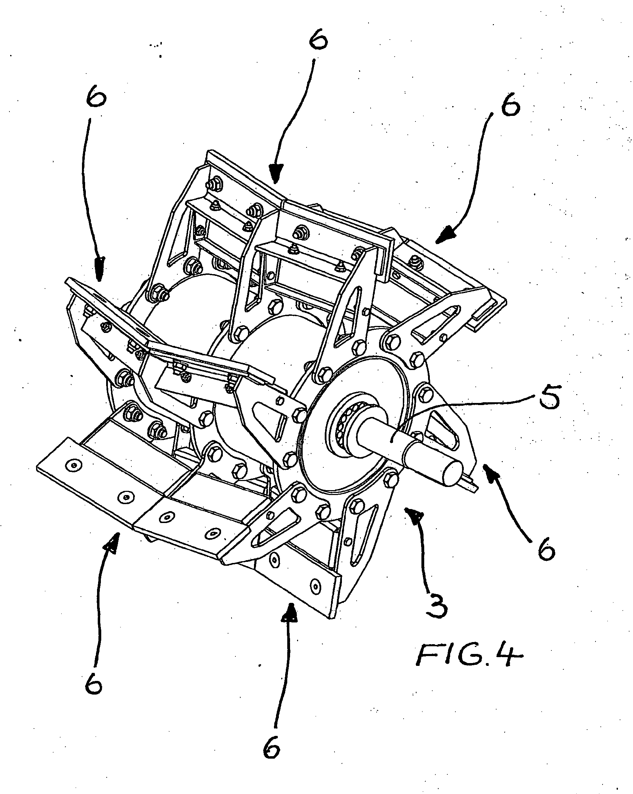

In der Figur 4 Ist alternativ zur Ausgestaltung der Figur 3 ein Schaufelrad mit insgesamt sechs auf dem Umfang verteilten Wurfschaufeln dargestellt.

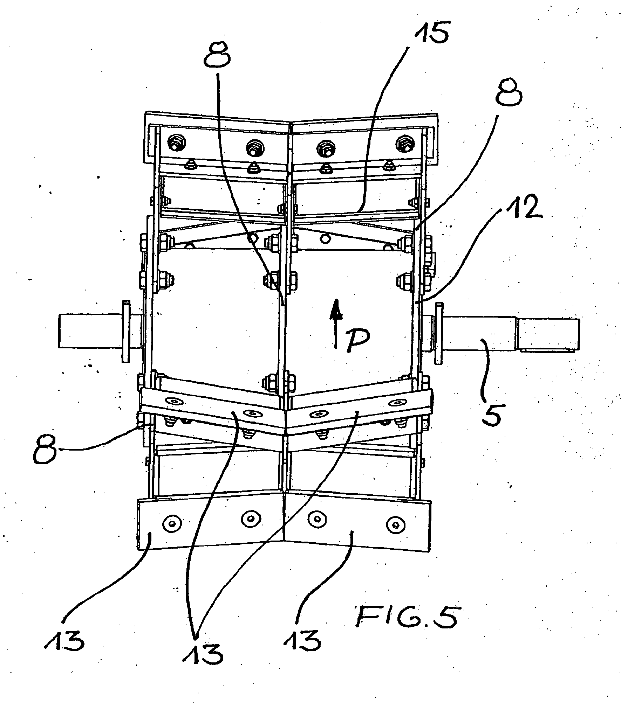

Um den Materialstrom innerhalb des Gebläsegehäuses 16 möglichst mittig zu zentrieren, sind, wie dies der Figur 5 zu entnehmen ist, die Mitnahmebleche 13 an den Wurfschaufeln 6 so angeordnet, dass ihre äußeren radialen Endbereiche gegenüber dem mittigen Bereich vorstehen, so dass sich eine v-förmige Ausgestaltung ergibt. Die vorstehenden äußeren Bereiche sind in Drehrichtung des Pfeiles P in der Figur 5 zu sehen, aus der in der dort dargestellten Draufsicht die zurückspringende Anordnung im Mittelbereich des Schaufelrades 3 der Mitnahmebleche 13 auch hinreichend deutlich wird.

Wie bereits bei der Erläuterung der Figur 1 dargelegt, ist an das Gebläsegehäuse 16 eine Versorgungseinheit 19 für eine Förderschnecke 20 angeflanscht. Darüber hinaus befindet sich benachbart der Versorgungseinheit 19 ein Transporttrichter 17 als Verbindungsglied zwischen dem Gebläsegehäuse 16 und einem Auswurfrohr 18. Das Auswurfrohr 18 ist am oberseitigen Ende des Transporttrichters 17 sowohl drehbar als auch in seiner Höhe schwenkbar festgelegt, wobei die Bewegungen durch geeignete Antriebsvorrichtungen unterstützbar gestaltet werden können.

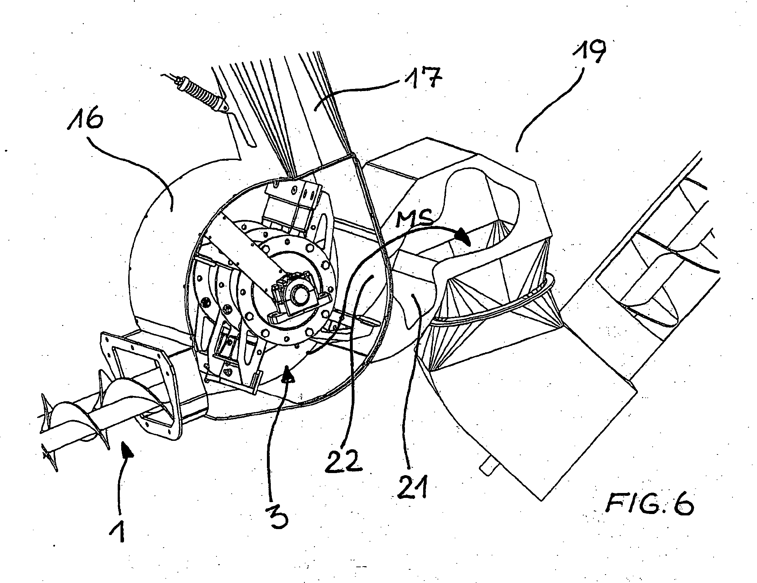

Der Transport des Hackgutmaterials über die Austragschnecke 1, die Gebläsevorrichtung 2 und die Versorgungseinheit 19 zur Förderschnecke 20 ist immer dann von Bedeutung, sofern empfindliches Hackgutmaterial zu transportieren ist. Um das Hackgutmaterial der Versorgungseinheit 19 zuzuleiten wird die Drehzahl des Schaufelrades 3 soweit reduziert, dass nur noch lediglich eine geringe Beschleunigung des Hackgutmaterials erfolgt. Gleichzeitig wird eine am Gebläsegehäuse angeordnete bewegliche Materialstromsteuerklappe 21 geöffnet. Entsprechend des Pfeiles MS in Figur 6 kann dann der Materialstrom aus dem Gebläsegehäuse 16 über die Öffnung 22 in die Versorgungseinheit 19 überführt werden und anschließend von der Förderschnecke 20 weitergeleitet werden.

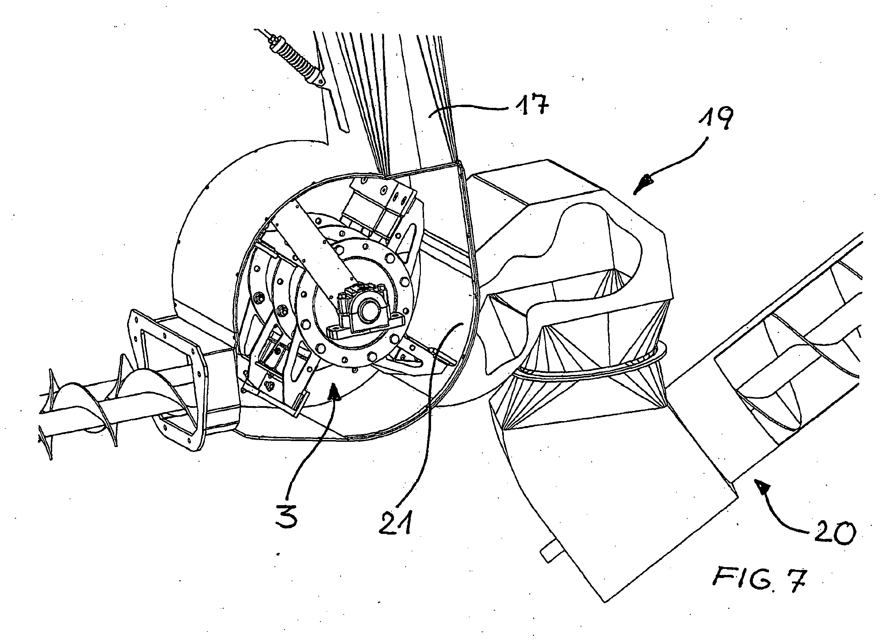

In der Darstellung der Figur 7 ist die Gebläsevorrichtung 2, die Versorgungseinheit 19 und die Förderschnecke 20 bei geschlossener Materialstromsteuerklappe 21 dargestellt. In diesem Falle wird der Hackgutmaterialstrom durch die erhöhte Drehzahl des Schaufelrades 3 soweit beschleunigt, dass das Hackgut in den Transporttrichter 17 und weiter in das Auswurfrohr 18 eingeschleudert wird. Die Bewegung der Materialstromklappe 21 kann sowohl durch einen automatischen Antrieb als auch manuell erfolgen.

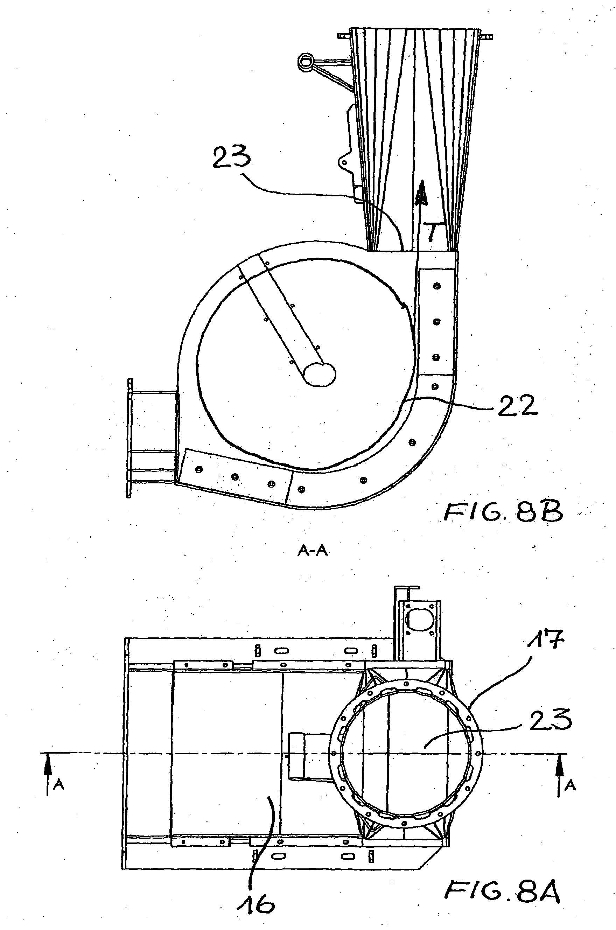

Um bei einem Transport des durch die Austragschnecke 1 und die Gebläsevorrichtung 2 geförderten Hackgutmaterials in das Auswurfrohr 18 einen Verschleiß des vorgeschalteten Transporttrichters 17 möglichst klein zu halten, ist der Transporttrichter 17 im Querschnitt so ausgebildet, dass das aus dem Gebläsegehäuse 16 in das Auswurfrohr 18 austretende Holzhackmaterial im zentralen Mittelbereich des durch die v-förmige Ausgestaltung der Mitnahmebleche 13 dort konzentrierten - Materialstromes frei an der Trichterwandung entlang strömt. Dies wird dadurch erreicht, dass die Tangente T an den Außenumfang 22 des in den Figuren 8a und 8b nicht näher dargestellten Schaufelrades 3 der Gebläsevorrichtung 2 im Bereich der Übergabeöffnung 23 zum Transporttrichter 17 die Wandung des Transporttrichters nicht schneidet. Nähere Einzelheiten der mathematisch konstruktiven Ausgestaltung sind den Figuren 8a und 8b zu entnehmen.

### Bezugszeichnungsliste

- 1: Austragschnecke
- 2: Gebläsevorrichtung
- 3: Schaufelrad
- 4: Schneckenwelle
- 5: Drehwelle
- 6: Wurfschaufel
- 7: Schneckenwindung
- 8: Aufnahmevorrichtung
- 9: Antriebe
- 10: Schneckengehäuseflansch
- 11: Durchbrechung
- 12: Wurfschaufelgestell
- 13: Mitnahmeblech
- 14: Rippe
- 15: Quertraverse
- 16: Gebläsegehäuse
- 17: Transporttrichter
- 18: Auswurfrohr
- 19: Versorgungseinheit
- 20: Förderschnecke
- 21: Materialstromsteuerklappe
- 22: Außenumfang
- 23: Übergabeöffnung

## Patentansprüche

1. Holzhackmaschine umfassend eine Austragvorrichtung und eine Gebläsevorrichtung (2), welche Austragvorrichtung mit einer Austragschnecke (1) zum Transport des Hackgutmaterials aus dem Zerkleinerer der Holzhackmaschine zu der Gebläsevorrichtung (2) mit mindestens einem, mit einer Mehrzahl von Wurfschaufeln (6) versehenen, auf einer Drehwelle (5) angeordneten Schaufelrad (3) versehen ist, **dadurch gekennzeichnet, dass**
die Drehwelle (5) des Schaufelrades (3) im wesentlichen rechtwinklig zur Längsachse der Austragschnecke (1) angeordnet ist,
in Drehrichtung des Schaufelrades (3) die äußeren Randbereiche der Wurfschaufeln (6) mit mindestens je einem austauschbaren Mitnahmeblech (13) versehen sind, und die Mitnahmebleche (13) so angeordnet sind, dass ihre äußeren radialen Endbereiche gegenüber dem mittigen Bereich vorstehen, so dass sich eine v-förmige Ausgestaltung ergibt.

2. Holzhackmaschine nach Anspruch 1,
**dadurch gekennzeichnet, dass**
die Austragschnecke (1) in ihrem der Gebläsevorrichtung (2) zugewandten Endbereich eine ansteigende Steigung aufweist.

3. Holzhackmaschine nach Anspruch 1 oder Anspruch 2,
**dadurch gekennzeichnet, dass**
das Schaufelrad (3) eine Aufnahmevorrichtung (8) zur wahlweisen Anordnung von zwei bis sechs Wurfschaufein (6) aufweist.

4. Holzhackmaschine nach einem der Ansprüche 1-3,
**dadurch gekennzeichnet, dass**
die Gebläsevorrichtung (2) ein Gebläsegehäuse (16) aufweist, welches mit einem Transporttrichter (17) zum Anschluss an einen Auswurfarm (18) und einer beweglichen Materialstromsteuerklappe (21) versehen ist.

5. Holzhackmaschine nach Anspruch 4,
**dadurch gekennzeichnet, dass**
die Materialstromsteuerklappe (21) die Öffnung zu einer Versorgungseinheit (19) für eine Förderschnecke (20) freigeben oder verschließen kann.

6. Holzhackmaschine nach Anspruch 4,
**dadurch gekennzeichnet, dass**
der Transporttrichter (17) im Querschnitt so ausgebildet ist, dass das aus dem Gebläsegehäuse (16) in den Auswurfarm austretende Holzhackmaterial im zentralen Mittelbereich des durch die v-förmige Ausgestaltung der Mitnahmebleche (13) dort konzentrierten Materialstroms frei an der Trichterwandung entlangströmt.

7. Holzhackmaschine nach Anspruch 6,
**dadurch gekennzeichnet, dass**
die Tangente an den Außenumfang (22) des Schaufelrades (3) der Gebläsevorrichtung (2) im Bereich der Übergabeöffnung (23) zum Transporttrichter (17) die Wandung des Transporttrichters (17) nicht schneidet.

## Claims

1. Wood chipper comprising a discharge device and a fan device (2), which discharge device comprising a discharge screw conveyor (1) for transporting the chipped material from the disintegrator of the wood chipper to the fan device (2) is provided with at least one blade wheel (3) provided with a plurality of blades (6) and arranged on a rotary shaft (5),
**characterised in that**
the rotary shaft (5) of the blade wheel (3) is arranged substantially at a right angle to the longitudinal axis of the discharge screw conveyor (1),
in the rotational direction of the blade wheel (3), each of the outer edge regions of the blades (6) is provided with at least one replaceable entraining plate (13), and
the entraining plates (13) are arranged such that the outer radial end regions thereof protrude in relation to the central region, forming a V shape.

2. Wood chipper according to claim 1, **characterised in that** the end region of the discharge screw conveyor (1) facing the fan device (2) has an ascending pitch.

3. Wood chipper according to either claim 1 or claim 2, **characterised in that** the blade wheel (3) comprises a receptacle (8) for optionally arranging from two to six blades (6).

4. Wood chipper according to any of claims 1 to 3, **characterised in that** the fan device (2) comprises a fan housing (16) which is provided with both a transport hopper (17) to be connected to a discharge arm (18) and a movable material flow control flap (21).

5. Wood chipper according to claim 4, **characterised in that** the material flow control flap (21) can open or close the opening to a supply unit (19) for an auger (20).

6. Wood chipper according to claim 4, **characterised in that** the cross section of the transport hopper (17) is formed such that the wood chip material leaving the fan housing (16) and entering the discharge arm flows freely along the hopper wall in the central region where the material flow is concentrated as a result of the V shape of the entraining plate (13).

7. Wood chipper according to claim 6, **characterised in that** the tangent at the outer circumference (22) of the blade wheel (3) of the fan device (2) does not intersect the wall of the transport hopper (17) in the region where the opening (23) passes into the transport hopper (17).

## Revendications

1. Déchiqueteuse de bois comprenant un dispositif de sortie d'évacuation et un dispositif de soufflante (2), ledit dispositif de sortie d'évacuation étant pourvu d'une vis sans fin de sortie d'évacuation (1) pour acheminer le matériau formé par le produit déchiqueté du broyeur de la déchiqueteuse de bois, au dispositif de soufflante (2) avec au moins une roue à ailettes (3) pourvue d'une pluralité d'ailettes d'éjection (6) et agencée sur un arbre de rotation (5),
**caractérisée**
**en ce que** l'arbre de rotation (5) de la roue à ailettes (3) est agencé sensiblement à angle droit par rapport à l'axe longitudinal de la vis sans fin de sortie d'évacuation (1),
**en ce que** dans la direction de rotation de la roue à ailettes (3), les zones de bordure extérieure des ailettes d'éjection (6) sont dotées respectivement d'au moins une tôle d'entraînement (13) pouvant être remplacée, et
**en ce que** les tôles d'entraînement (13) sont agencées de manière telle, que leurs zones d'extrémité radiales extérieures sont en avant par rapport à la zone médiane, de sorte qu'il en résulte une configuration en forme de V.

2. Déchiqueteuse de bois selon la revendication 1,
**caractérisée**
**en ce que** la vis sans fin de sortie d'évacuation (1) présente un pas croissant dans sa zone d'extrémité dirigée vers le dispositif de soufflante (2).

3. Déchiqueteuse de bois selon la revendication 1 ou la revendication 2,
**caractérisée**
**en ce que** la roue à ailettes (3) comporte un dispositif d'accueil (8) pour l'agencement sélectif de deux jusqu'à six ailettes d'éjection (6).

4. Déchiqueteuse de bois selon l'une des revendications 1-3,
**caractérisée**
**en ce que** le dispositif de soufflante (2) comporte un carter de soufflante (16), qui est pourvu d'une trémie d'acheminement (17) destinée au raccordement à un bras d'éjection (18), et d'un volet de commande du flux de matériau (21).

5. Déchiqueteuse de bois selon la revendication 4,
**caractérisée**
**en ce que** le volet de commande du flux de matériau (21) peut dégager ou fermer l'ouverture d'une unité d'alimentation (19) pour une vis sans fin de transport (20) .

6. Déchiqueteuse de bois selon la revendication 4,
**caractérisée**
**en ce que** la trémie d'acheminement (17) est réalisée de manière telle, en section transversale, que le matériau de bois déchiqueté sortant du carter de soufflante (16) vers le bras d'éjection, s'écoule librement le long de la paroi de trémie dans la zone médiane centrale du flux de matériau, qui est concentré en cet endroit par la configuration en forme de V des tôles d'entraînement (13) .

7. Déchiqueteuse de bois selon la revendication 6,
**caractérisée**
**en ce que** la tangente à la périphérie extérieure (22) de la roue à ailettes (3) du dispositif de soufflante (2), dans la zone de l'ouverture de transfert (23) à la trémie d'acheminement (17), ne coupe pas la paroi de la trémie d'acheminement (17).
